# DEMANDE DE BREVET EUROPEEN

(11) **EP 1 841 043 A1**
(43) Date de publication de la demande: **03.10.2007**
(21) Numéro de dépôt: 07300898.9
(22) Date de dépôt: 26.03.2007
(51) Int. Cl.: H02K 5/08, H02K 5/20, H02K 9/19

(54) **Machine à stator moulé et son procédé de fabrication**

(30) Priorité: 29.03.2006 FR 0651087
(71) Demandeur: MOTEURS LEROY-SOMER, 16000 Angouleme (FR)
(72) Inventeur: Bassaw, Benjamin, 16730 Fleac (FR); Dufau, Stéphane, 16000 Angoulême (FR)
(74) Mandataire: Tanty, François

(57) **Abrégé**

La présente invention concerne une machine électrique tournante ayant un axe de rotation, comportant un stator (2) comportant une culasse (3) et des conducteurs électriques (5) noyés au moins partiellement dans un matériau d'enrobage (6), au moins un canal (10) de circulation d'un fluide étant ménagé dans le matériau d'enrobage (6).

## Description

La présente invention concerne les machines électriques tournantes et plus particulièrement celles comportant un stator comprenant une culasse et des conducteurs électriques noyés dans un matériau d'enrobage.

La demande EP 1 100 180 A2 divulgue une machine selon le préambule de la revendication 1.

L'invention concerne les machines pour lesquelles il est nécessaire de prévoir au moins un canal de circulation d'un fluide, par exemple un fluide de refroidissement et/ou de lubrification.

Une telle circulation peut être utile par exemple pour des moteurs pour pompe à vide où il est nécessaire de lubrifier les roulements avant et arrière avec un fluide de lubrification. Dans le cas où l'apport de fluide de lubrification ne se fait que d'un côté axial de la machine, il peut être intéressant de prévoir un canal pour transporter le fluide de lubrification d'un côté à l'autre de la machine afin de lubrifier les roulements disposés de part et d'autre du corps du rotor.

L'utilisation de tubes extérieurs au carter de la machine peut présenter des inconvénients, notamment dans le cas d'un moteur devant fonctionner sous vide. De tels tubes extérieurs peuvent être coûteux et ils peuvent nécessiter d'assurer une étanchéité à leurs extrémités de raccordement.

D'autre part, ils peuvent augmenter l'encombrement total de la machine.

Enfin, la section de passage du fluide est nécessairement diminuée par l'épaisseur du tube.

Par ailleurs, il existe un besoin pour améliorer le refroidissement des conducteurs électriques du stator.

L'invention répond à tout ou partie de ces besoins.

L'invention a ainsi pour objet une machine électrique tournante ayant un axe de rotation, comportant un stator comportant une culasse et des conducteurs électriques noyés, au moins partiellement, voire complètement, dans un matériau d'enrobage, au moins un canal de circulation d'un fluide étant ménagé dans le matériau d'enrobage.

La machine peut comporter, comme défini à la revendication 1, un carter comportant au moins une encoche ouverte sur la surface intérieure du carter en direction du stator, le canal s'étendant au moins partiellement dans l'encoche du carter.

La présence d'un ou plusieurs canaux de circulation du fluide peut permettre de transporter le fluide d'un côté à l'autre de la machine, par exemple dans le cas où il est nécessaire de lubrifier des roulements avant et arrière de la machine et/ou de refroidir les conducteurs électriques du stator.

Au moins un canal de circulation peut être radialement extérieur aux conducteurs électriques du stator. Ce canal de circulation peut s'étendre parallèlement à l'axe de rotation de la machine.

Au moins un canal de circulation peut ne pas être entouré par des conducteurs électriques du stator et les conducteurs électriques peuvent se situer d'un côté seulement de ce canal.

La machine est prévue pour fonctionner sans conducteurs électriques supraconducteurs.

Le fluide peut être un fluide de lubrification, par exemple un liquide tel que de l'huile, ou un fluide de refroidissement, par exemple un liquide tel que de l'eau ou de l'huile. Le fluide peut être encore un gaz.

Le matériau d'enrobage peut être une résine, isolante électriquement, non magnétique, notamment une résine durcissable, par exemple une résine époxy ou un polymère thermodurcissable.

La machine peut comporter un seul canal ou plusieurs canaux, au moins un canal pouvant présenter une section transversale, prise perpendiculairement à l'axe longitudinal de la machine, de forme circulaire.

La machine peut comporter une entrée de fluide d'un côté seulement de celle-ci.

Le ou les canaux ménagés dans le matériau d'enrobage peuvent communiquer avec au moins un conduit ménagé dans un flasque de la machine et/ou dans un boîtier de roulement de la machine. La machine peut comporter au moins un joint torique d'étanchéité disposé à l'extrémité d'au moins un canal, entre ce canal et le conduit.

Le carter peut être réalisé par fonderie avec une ou plusieurs encoches, en aluminium par exemple.

Un écart de pression peut exister au cours du fonctionnement de la machine entre l'intérieur et l'extérieur du carter de la machine. La machine peut entraîner par exemple une pompe à vide.

La culasse du stator peut comporter un empilement de tôles magnétiques. Les conducteurs électriques du stator peuvent comporter au moins un bobinage disposé sur une dent de la culasse. Le stator peut par exemple être à bobinage concentré ou distribué. Le stator peut être un stator extérieur.

L'invention a encore pour objet, selon un autre de ses aspects, un procédé de fabrication d'une machine électrique tournante comportant une culasse et des conducteurs électriques noyés au moins partiellement dans un matériau d'enrobage, dans lequel on réalise au moins un canal de circulation d'un fluide dans le matériau d'enrobage des conducteurs électriques.

On peut utiliser un matériau d'enrobage durcissable et au moins une tige réalisée, par exemple, dans un matériau à coefficient de dilatation thermique supérieur au coefficient de dilatation thermique du matériau d'enrobage pour former le canal. La tige peut être présente avant que le matériau d'enrobage ne soit coulé ou injecté. La tige peut être configurée pour ne pas adhérer au matériau d'enrobage pendant le durcissement du matériau d'enrobage, et présenter, par exemple, un revêtement anti-adhérent. On peut retirer la tige après durcissement du matériau d'enrobage afin de ménager le canal de circulation du fluide. On peut également disposer une rondelle à l'extrémité de la tige pour ménager, après durcissement du matériau d'enrobage et retrait de la tige et de la rondelle, un lamage pour un joint d'étanchéité.

En variante, on peut usiner dans le matériau d'enrobage le canal de circulation du fluide, notamment par enlèvement de matière.

L'invention a encore pour objet une pompe à vide telle que définie à la revendication 20.

L'invention pourra être mieux comprise à la lecture de la description détaillée qui va suivre, d'un exemple de réalisation, et à l'examen du dessin annexé, sur lequel :
- la figure 1 est une coupe longitudinale, schématique et partielle, d'une machine réalisée conformément à l'invention, et
- la figure 2 représente isolément, en perspective, de manière schématique et partielle, le carter de la machine de la figure 1.

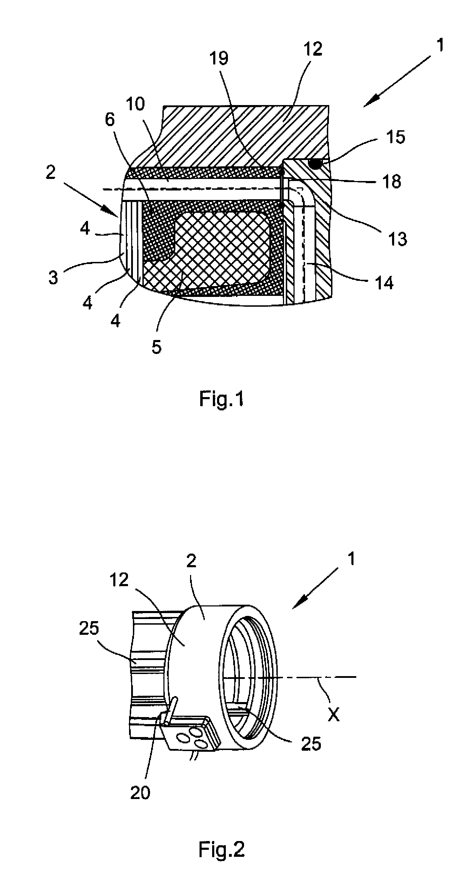

On a représenté à la figure 1 une machine électrique tournante 1 conforme à l'invention, comportant un stator 2 comportant une culasse 3 comprenant un empilement de tôles magnétiques 4 et des conducteurs électriques 5 comprenant des bobinages disposés sur des dents de la culasse 3. Les conducteurs électriques 5 sont noyés dans un matériau d'enrobage 6 dans lequel est ménagé au moins un canal 10 de circulation d'un fluide.

Le matériau d'enrobage 6 est par exemple une résine durcissable, isolante et non magnétique, par exemple une résine époxy qui est coulée ou injectée dans le carter 12 de la machine autour de la culasse 3 et des conducteurs électriques 5 une fois la mise en place des bobinages terminée.

Le matériau d'enrobage durcit au cours de sa polymérisation et assure une isolation électrique.

Avant le durcissement du matériau d'enrobage 6, on peut, afin de réaliser le ou les canaux 10, disposer dans le carter avant d'avoir coulé ou injecté le matériau d'enrobage, une ou plusieurs tiges réalisées dans un matériau à coefficient de dilatation différent de celui du matériau d'enrobage, par exemple supérieur, puis retirer ces tiges après le durcissement du matériau d'enrobage. Le retrait des tiges est facilité dans le cas où les tiges n'adhèrent pas au matériau d'enrobage pendant le durcissement du matériau.

En variante, les canaux 10 peuvent être réalisés par usinage du matériau d'enrobage durci.

Dans l'exemple illustré à la figure 1, le canal 10 est tubulaire et de section transversale, prise perpendiculairement à l'axe longitudinal X de la machine, circulaire.

Bien entendu, on ne sort pas du cadre de la présente invention s'il en est autrement, et si la section transversale du canal 10 est autre, par exemple carrée ou oblongue.

La machine 1 comporte par exemple entre 2 et 3 canaux 10. Les canaux 10 peuvent par exemple être régulièrement disposés sur la périphérie de la machine 1, étant équirépartis angulairement.

Les canaux 10 peuvent être radialement extérieurs aux conducteurs électriques 5 et ne pas être entourés par des conducteurs électriques 5.

On peut faire circuler dans le ou les canaux 10 un fluide de refroidissement, par exemple de l'huile ou de l'eau, par exemple pour améliorer le refroidissement des conducteurs électriques 5.

Dans l'exemple illustré à la figure 1, la machine comporte également un flasque d'extrémité 13, dans lequel est ménagé au moins un conduit 14 communiquant avec le canal 10 et servant à conduire le fluide circulant dans le canal 10 vers les roulements sur lesquels repose l'arbre de la machine, non représentés. Le fluide circulant dans le canal 10 peut dans ce cas être un fluide de lubrification, notamment un liquide, par exemple de l'huile, afin de servir à la lubrification des roulements disposés de part et d'autre du stator, le fluide de lubrification circulant de l'un à l'autre par le canal 10.

Le flasque 13 peut comporter plusieurs conduits 14 interconnectés dans la région du roulement correspondant.

La machine peut comporter une seule entrée 20 de fluide de lubrification ménagée dans le carter 12, comme illustré à la figure 2, le fluide arrivant à un premier roulement pour lubrifier celui-ci et circulant en direction de l'autre extrémité de la machine pour lubrifier le deuxième roulement, une sortie du fluide de lubrification pouvant par exemple être ménagée à l'autre bout de la machine.

Le flasque 13 est fixé au carter 12 de manière étanche grâce à un joint d'étanchéité torique 15 qui permet par exemple d'assurer l'étanchéité intérieure de la machine, notamment dans le cas où celle-ci est un moteur fonctionnant sous vide et qu'il existe une différence de pression entre l'intérieur et l'extérieur de la machine au cours de son fonctionnement.

D'autre part, un joint torique 18 est disposé dans un lamage 19 ménagé dans le matériau d'enrobage 6 pour assurer l'étanchéité de la liaison entre chaque canal 10 et le conduit 14 correspondant du flasque 13, ce joint 18 s'interposant entre le fond du lamage 19 et du flasque 13.

Le carter 12 comporte, comme illustré à la figure 2, des encoches longitudinales 25 ouvertes sur sa surface intérieure, en direction du stator, destinées à être remplies par le matériau d'enrobage 6 et à l'intérieur desquelles s'étendent au moins partiellement, après durcissement du matériau d'enrobage 6, les canaux 10.

L'expression « comportant un » doit être comprise comme étant synonyme de « comportant au moins un », sauf si le contraire est spécifié.

## Revendications

1. Machine électrique tournante ayant un axe de rotation (X), comportant un stator (2) comportant une culasse (3) et des conducteurs électriques (5) noyés au moins partiellement dans un matériau d'enrobage (6), au moins un canal (10) de circulation d'un fluide étant ménagé dans le matériau d'enrobage (6), la machine étant **caractérisée par le fait qu'**elle comporte en outre un carter (12) comportant au moins une encoche (25) ouverte sur la surface intérieure du carter en direction du stator, cette encoche étant remplie par le matériau d'enrobage, ledit au moins un canal (10) s'étendant au moins partiellement dans cette encoche (25).

2. Machine selon la revendication précédente, dans laquelle le canal (10) de circulation est radialement extérieur aux conducteurs électriques (5) du stator.

3. Machine selon l'une des deux revendications précédentes, dans laquelle le fluide est un fluide de lubrification, notamment de l'huile.

4. Machine selon la revendication 1, étant un moteur de pompe à vide.

5. Machine selon l'une quelconque des revendications 1 à 3, le fluide étant un fluide de refroidissement, notamment de l'eau ou de l'huile.

6. Machine selon l'une quelconque des revendications précédentes, dans laquelle le matériau d'enrobage (6) est une résine isolante électriquement, notamment une résine thermodurcissable ou epoxy.

7. Machine selon l'une quelconque des revendications précédentes, dans laquelle ledit au moins un canal (10) présente une section transversale, prise perpendiculairement à l'axe longitudinal (X) de la machine, de forme circulaire.

8. Machine selon l'une quelconque des revendications précédentes, comportant une entrée (20) de fluide d'un côté axial seulement de la machine, ledit au moins un canal (10) étant en communication fluidique avec cette entrée.

9. Machine selon l'une quelconque des revendications précédentes, dans laquelle ledit au moins un canal (10) communique avec au moins un conduit (14) ménagé dans un flasque (13) de la machine et/ou dans un boîtier de roulement de la machine.

10. Machine selon la revendication précédente, comportant au moins un joint torique d'étanchéité (18) disposé à l'extrémité dudit au moins un canal, entre celui-ci et le conduit (4).

11. Machine selon l'une quelconque des revendications précédentes, le carter étant réalisé par fonderie.

12. Machine selon l'une quelconque des revendications précédentes, ledit au moins un canal (10) présentant une section transversale, prise perpendiculairement à l'axe de rotation longitudinal (X) de la machine, de forme circulaire.

13. Machine selon l'une quelconque des revendications 1 à 12, ledit au moins un canal (10) communiquant avec au moins un conduit (14) ménagé dans un flasque (13) de la machine et/ou dans un boîtier de roulement de la machine.

14. Procédé de fabrication d'une machine électrique tournante, la machine électrique tournante comportant une culasse (3) et des conducteurs électriques (5) noyés au moins partiellement dans un matériau d'enrobage (6), procédé dans lequel on réalise au moins un canal (10) de circulation d'un fluide dans le matériau d'enrobage (6) des conducteurs électriques, la machine comportant en outre un carter (12) comportant au moins une encoche (25) ouverte sur la surface intérieure du carter en direction du stator, ledit au moins un canal (10) s'étendant au moins partiellement dans cette encoche (25).

15. Procédé selon la revendication précédente, dans lequel on utilise un matériau d'enrobage durcissable et l'on forme le canal (10) en enlevant une tige après durcissement du matériau d'enrobage, notamment une tige réalisée dans un matériau à coefficient de dilatation thermique différent du coefficient de dilatation thermique du matériau d'enrobage, notamment supérieur.

16. Procédé selon la revendication précédente, dans lequel la tige est configurée pour ne pas adhérer au matériau d'enrobage pendant le durcissement du matériau d'enrobage.

17. Procédé selon l'une des deux revendications précédentes, dans lequel on dispose une rondelle à l'extrémité de la tige pour ménager, après durcissement du matériau d'enrobage et retrait de la tige, un lamage (19) pour un joint d'étanchéité (18).

18. Procédé selon la revendication 14, dans lequel on usine dans le matériau d'enrobage le canal de circulation du fluide.

19. Procédé de fabrication d'une machine électrique tournante, la machine électrique tournante comportant une culasse (3) et des conducteurs électriques (5) noyés au moins partiellement dans un matériau d'enrobage (6), procédé dans lequel on réalise au moins un canal (10) de circulation d'un fluide dans le matériau d'enrobage (6) des conducteurs électriques, en utilisant un matériau d'enrobage durcissable et en formant le canal (10) en enlevant une tige après durcissement du matériau d'enrobage, la tige étant configurée pour ne pas adhérer au matériau d'enrobage pendant le durcissement du matériau d'enrobage.

20. Pompe à vide comportant un moteur ayant des roulements avant et arrière lubrifiés par un fluide de lubrification, l'apport de fluide ayant lieu d'un côté axial seulement de la machine, le moteur comportant un stator comprenant une culasse et des conducteurs électriques noyés au moins partiellement dans un matériau d'enrobage, au moins un canal de circulation du fluide étant ménagé dans le matériau d'enrobage.
